# EUROPÄISCHE PATENTSCHRIFT

(11) **EP 1 188 261 B1**
(45) Veröffentlichungstag und Bekanntmachung des Hinweises auf die Patenterteilung: **11.05.2005**
(21) Anmeldenummer: 00952855.5
(22) Anmeldetag: 21.06.2000
(51) Int. Cl.: H04B 7/26, H04Q 7/36

(54) **ALTERNIERENDE AUFWÄRTSVERBINDUNGS/ABWÄRTSVERBINDUNGS-ÜBERGÄNGE BEI DER KANALZUTEILUNG IN EINEM TDD-ÜBERTRAGUNGSRAHMEN MIT MEHREREN SCHALTZEITPUNKTEN**
ALTERNATING UPWARDS LINK/DOWNWARDS LINK TRANSITIONS IN THE CHANNEL ALLOCATION IN A TDD-TRANSMISSION FRAME WITH SEVERAL SWITCHING INSTANTS
TRANSITIONS ALTERNANTES DE LIAISON MONTANTE/DESCENDANTE LORS DE L'ATTRIBUTION DE CANAUX DANS UNE TRAME DE TRANSMISSION DRT AVEC PLUSIEURS INSTANTS DE COMMUTATION

(30) Priorität: 22.06.1999 DE 19928579
(43) Veröffentlichungstag der Anmeldung: 20.03.2002
(73) Patentinhaber: SIEMENS AKTIENGESELLSCHAFT, 80333 München (DE)
(72) Erfinder: EMMER, Dieter, D-82319 Starnberg (DE); REHFUESS, Ulrich, D-81475 München (DE); WEGMANN, Bernhard, D-83607 Holzkirchen (DE)
(86) Internationale Anmeldenummer: PCT/DE2000/002019
(87) Internationale Veröffentlichungsnummer: WO 2000/079704

(56) Entgegenhaltungen:
- WO-A-98/29988

## Beschreibung

Die Erfindung betrifft ein Verfahren zur Steuerung von Uplink/Downlink- bzw. Aufwärtsverbindungs/Abwärtsverbindungs-Übergängen bei der Kanalzuteilung in einem Übertragungsrahmen, insbesondere TDD-Übertragungsrahmen gemäß dem Patentanspruch 1 und eine Einrichtung eines Funk-Kommunikationssystem zum Durchführen des Verfahrens.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900, 1800 bzw. 1900 MHz. Für zukünftige Mobilfunknetze mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Frequenzmultiplex (FDMA), Zeitlagenmultiplex (TDMA) oder ein als Codemultiplex (CDMA) bekanntes Verfahren dienen der Unterscheidung der Signalquellen und damit zur Auswertung der Signale. Eine besondere Ausprägung des Zeitlagenmultiplex ist ein TDD- (Time Division Duplex) Übertragungsverfahren, bei dem in einem gemeinsamen Frequenzband die Übertragung zeitlich getrennt sowohl in Aufwärtsrichtung (Uplink), d.h. von der Mobilstation zur Basisstation, als auch in Abwärtsrichtung (Downlink), d.h. von der Basisstation zur Mobilstation, erfolgt.

In dem TDD-System befinden sich Uplink- und Downlink-Zeitschlitze in einem Übertragungsrahmen. Nimmt man an, daß einem Operator nur ein Frequenzband (eine Carrier Frequency) zur Verfügung steht, kann man im Rahmen eines Kanalzuweisungsverfahrens ein Timeslot-Clustering einführen, um die Wiederverwendbarkeit des Kanals (d.h. Zeitschlitzes) in einem gewissen Abstand garantieren zu können. Die Aufgabe des Kanalzuteilungsverfahrens ist die zur Verfügung stehenden Ressourcen einerseits auf die Zellen zu verteilen (was auf einer eher langsameren Zeitachse passiert) und andererseits die Allokierung einer (oder mehrerer) Ressource(n) für eine bestimmte Verbindung (Service) vorzunehmen. Das nachfolgend vorgeschlagene Verfahren setzt sich insbesondere mit dem ersteren auseinander.

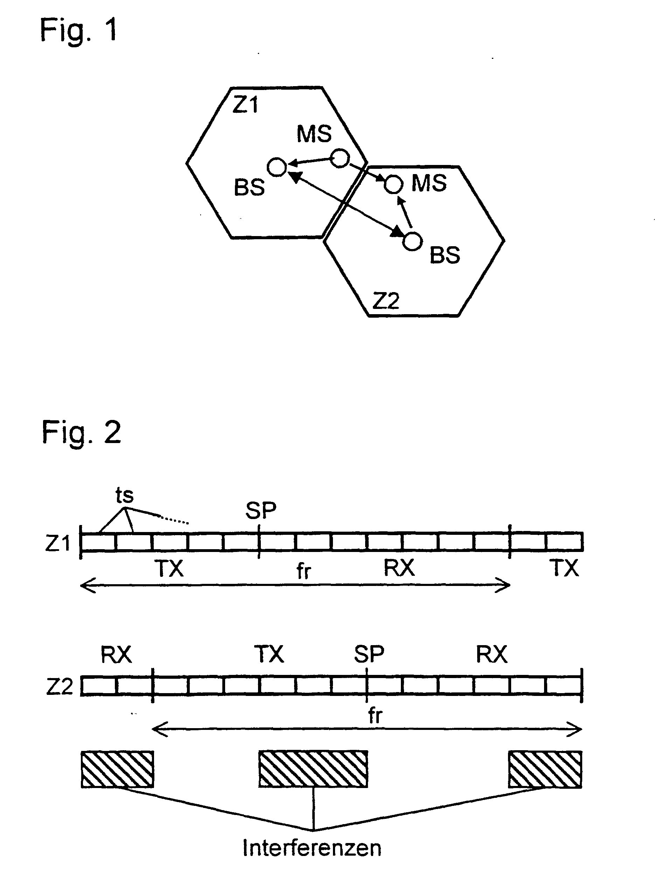

Für zwei in FIG. 1 dargestellte benachbarte Zellen Z1 und Z2 mit Basisstationen BS und Mobilstationen MS ergeben sich bei synchroner Abstimmung der Übertragungsrahmen der benachbarten Stationen bzw. Zellen für eine Mobilstation MS, die Signale der ihr zugeordneten Basisstation BS empfängt, besonders starke Interferenzen von einer Mobilstation MS, die sich nahebei in der Nachbarzelle befindet. Dieser Fall, der bei einer homogener Verteilung der Mobilstationen sehr oft auftritt, ist besonders an den Zellgrenzen kritisch.

So ergeben sich nach FIG. 2 Interferenzen für die Konstellation, daß sich der Sendefall TX einer Mobilstation MS mit dem Empfangsfall RX der anderen Mobilstation MS überlappt. Ein Umschaltpunkt SP (switching point) trennt dabei jeweils den Sende- TX und den Empfangsfall RX. Für eine rahmenweise Übertragung, wobei ein Rahmen fr mehrere Zeitschlitze ts umfaßt, hängt die Dauer des Auftretens von Interferenzen von der Verschiebung des Rahmenbeginns und der Position des Umschaltpunkts SP zwischen beiden Zellen Z1, Z2 ab. Starke Interferenzen verursachen Verluste bei der spektralen Effizienz des Funk-Kommunikationssystems.

In gängigen TDD-Verfahren gibt es daher Rahmensynchronisation und keinen variablen, sondern einen festen Schaltzeitpunkt, damit innerhalb des Kommunikationsnetzes eine feste Zuordnung besteht (z.B. Zeitschlitze 0-11 für Downlink, 12-23 für Uplink.

Eine Rahmensynchronisation allein führt jedoch noch nicht zu optimalen Ergebnissen, wenn in benachbarten Zellen unterschiedliche Anforderungen an die Auslastung bestehen. Ungelöst ist insbesondere der Fall, bei dem in einer Zelle größere Datenmengen in Aufwärtsrichtung, in benachbarten Zellen aber größere Datenmengen in Abwärtsrichtung zu übertragen sind.

Aus der US 5,719,859 ist ein TDMA-Funk-Kommunikationssystem bekannt, bei dem eine einzelne Basisstation mit einer Vielzahl von Mobilstationen in ihrem Sendebereich kommuniziert. Den Mobilstationen werden dabei lastabhängig variabel einzelne Kanäle eines Übertragungsrahmens zugeordnet. Ferner wird angegeben, innerhalb eines Übertragungsrahmens dessen Zeitschlitze für Aufwärtsverbindungen von Beginn des Übertragungsrahmens einzuplanen und dessen Zeitschlitze für Abwärtsverbindungen von dessen Ende an zu dessen Beginn hin einzuplanen. Jeder Zeitschlitz wird dabei nur für eine einzige Mobilstation und nur für eine einzige Übertragungsrichtung zugeordnet.

Eine Erweiterung dieses Kommunikationssystems auf ein zellulares Kommunikationssystem mit einer Vielzahl benachbarter Zellen ist aus der WO 98/29988 A1 bekannt. In dieser wird vorgeschlagen, eine Vielzahl von Funkzellen und Sektoren innerhalb dieser clusterartig zu gruppieren. Bei der Anordnung sind jeweils Sektoren zweier verschiedener Zellen direkt benachbart, so daß ein 2er-Cluster ausgebildet wird. Weiterhin wird angegeben, die Übertragungsrahmen in zwei Unterrahmen zu unterteilen, wobei ein Unterrahmen ausdrücklich nur für entweder Aufwärts- oder Abwärtsverbindungen verwendet werden soll. Weiterhin wird angewiesen, eine Zuweisung der beiden Unterrahmen zu den verschiedenen Sektoren vorzunehmen. Demnach kann, unabhängig von den weiteren Ausführungen, in dem einen Sektor einer jeden Zelle während eines Rahmens entweder nur empfangen oder nur gesendet werden. Für den nächsten Rahmen muß folglich die Übertragungsrichtung für den gesamten Übertragungsrahmen umgekehrt werden.

Die Zuweisung der Ressourcen erfolgt nach einem ähnlichen Grundprinzip wie bei der US 5,719,859, jedoch wird hier lediglich eine Aufteilung von Paketdaten auf diese Unterrahmen, nicht aber eine Zuweisung von Kanälen eines TDD-Systems angegeben.

Der Erfindung liegt die Aufgabe zugrunde, ein verbessertes Verfahren und ein verbessertes Kommunikationssystem, insbesondere Funk- Kommunikationssystem bereitzustellen, bei denen bei benachbarten Zellen die Schaltpunkte zwischen Aufwärtsund Abwärtsübertragungszeiten variabler gewählt werden können.

Diese Aufgabe wird durch das Verfahren mit den Merkmalen des Anspruchs 1 und durch die Einrichtungen eines Funk-Kommunikationssystems mit den Merkmalen des Anspruchs 9 gelöst. Vorteilhafte Weiterbildungen sind den abhängigen Patentansprüchen zu entnehmen.

Das TDD-Übertragungsverfahren kann vom Grundkonzept her auch asymmetrische Dienste unterstützen, bei denen die Übertragungskapazität in Aufwärtsrichtung nicht gleich der in Abwärtsrichtung zu sein braucht. Wenn diese Asymmetrie nicht in allen Funkzellen gleichermaßen gewünscht wird, so kann ein kritisches Interferenzszenario entstehen. Die bisher gemachten Überlegungen zum TDD-Übertragungsverfahren verkennen die diesbezüglichen Probleme der gegenseitigem Störungen einer Vielzahl von Basisstationen und Mobilstationen, die im gleichen Frequenzband betrieben werden.

Vorgeschlagen wird hier ein Verfahren, das eine optimale Aufteilung der Zeitschlitze innerhalb des Übertragungsrahmens und insbesondere TDD-Übertragungsrahmens bereitstellt und dabei die gleichzeitige Umsetzung der beiden folgenden Kriterien ermöglicht:
1. Sich ändernde Uplink/Downlinkverhältnisse können durch einen variablen Schaltzeitpunkt (switching point) zwischen den Uplink- und Downlink-Zeitschlitzen innerhalb einer Zelle nahezu unabhängig von den Schaltzeitpunkten der anderen Zellen berücksichtigt werden.
2. Eine sich ändernde Lastverteilung im Netz kann durch die zeitliche Ausdehnung der Zugriffszeit für eine Verbindung in einer Zelle bzw. mit anderen Worten durch die Allokierung unterschiedlich vieler Kanäle (Zeitschlitze) pro Zelle im Reuse ermöglicht werden.

Die beiden Kriterien führen durch die Bedingung der gleichgerichteten Aufwärts- oder Abwärtsverbindungsrichtung in benachbarten aktiven Zellen oder Zellgruppen nicht zu der Problematik einer Gleich-Kanal-Interferenz in Form von wechselseitiger Störung von zwei Mobilstationen in unmittelbar benachbarten Zellen unterschiedlicher Reuse-Cluster, von denen eine exakt auf dem Kanal (Zeitschlitz) sendet, auf dem die andere gerade empfängt. Gleiches gilt für die Interferenz zwischen Basisstationen, wenn beide auf demselben Zeitschlitz senden oder empfangen.

Mit der hier vorgeschlagenen Lösung kann der TDD-Modus nun auch mit nur einer Frequenz realisiert werden.

Die vorgeschlagene Kombination der separaten Umschaltpunkte pro Zelle (siehe nachfolgend Fall a) und des Vorteils der sich nicht ändernden Verbindungsrichtung gleicher Zeitschlitze (siehe nachfolgend Fall b) ermöglicht, daß es sowohl bei der Änderung des Aufwärtsverbindungs-/ Abwärtsverbindungs-(UL/DL)-Verhältnisses in der Zelle wie auch bei einer Laständerung (anderer Ressourcenverteilung über die Zellen im Cluster) nicht zu den unerwünschten MS-MS Interferenzen kommt. Dieses Verfahren verwendet dafür mehrere Schaltzeitpunkte (einen pro Zelle) mit alternierendem UL/DL-Wechsel von aufeinanderfolgenden zellspezifischen Kanalzuteilungen innerhalb des Übertragungsrahmens (siehe Fall c).

Bei Dreier- oder Vierer-Clusteranordnungen sind entsprechend jeweils nur die Schaltzeitpunkte von bis zu drei bzw. vier Zellen bzw. Gruppen von Zellen aufeinander abzustimmen.

Nachfolgend werden Ausführungsbeispiele anhand der Zeichnung näher erläutert. Es zeigen:
- Fig. 1: zwei Zellen mit je einer Basis- und einer Mobilstation,
- Fig. 2: den Fall einer Interferenz zwischen zwei benachbarten Mobilstationen, von denen eine sendet und die andere zeitgleich empfängt,
- Fig. 3: ein Blockschaltbild eines Mobilfunksystems,
- Fig. 4: gemäß einem ersten Ausführungsbeipiel ein Mobilfunksystem in einem Macroenvironment mit einem Dreier-Cluster und die dazugehörigen Übertragungsrahmen mit mehreren Schaltzeitpunkten,
- Fig. 5: dieses Mobilfunksystem und dessen Übertragungsrahmen mit mehreren Schaltzeitpunkten und verschiedener Anzahl von Zeitschlitzen pro Zelle mit Interferenz,
- Fig. 6: dieses Mobilfunksystem und dessen Übertragungsrahmen mit einem gemeinsamen Schaltzeitpunkt und verschiedener Anzahl von gruppierten Zeitschlitzen pro Zelle,
- Fig. 7: dieses Mobilfunksystem und dessen Übertragungsrahmen mit je einem verschiedenen Schaltzeitpunkt pro Übertragungsrahmen und verschiedener Anzahl von Zeitschlitzen pro Zelle in Interferenzsituation,
- Fig. 8: dieses Mobilfunksystem und dessen Übertragungsrahmen mit mehreren Schaltzeitpunkten bei gleicher Verbindungsrichtung benachbarter Zellen,
- Fig. 9: dieses Mobilfunksystem und dessen Übertragungsrahmen mit mehreren zeitlich variablen Schaltzeitpunkten mit tolerierbaren Interferenzen,
- Fig. 10: dieses Mobilfunksystem und dessen Übertragungsrahmen mit mehreren zeitlich variablen Schaltzeitpunkten und verschiedener Anzahl von Zeitschlitzen pro Zelle mit tolerierbaren Interferenzen,
- Fig. 11: gemäß einem weiteren Ausführungsbeispiel ein anderes Szenario mit Microenvironment und einem Dreier-Cluster mit Übertragungsrahmen,
- Fig. 12: ein beispielhaftes Szenario mit Microenvironment und einem Zweier-Cluster mit Übertragungsrahmen,
- Fig. 13: ein Mobilfunksystem mit einem mittleren Zeitschlitzwiederholabstand (Re-Use) von 4 und
- Fig. 14: ein Blockschaltbild einer Steuereinrichtung.

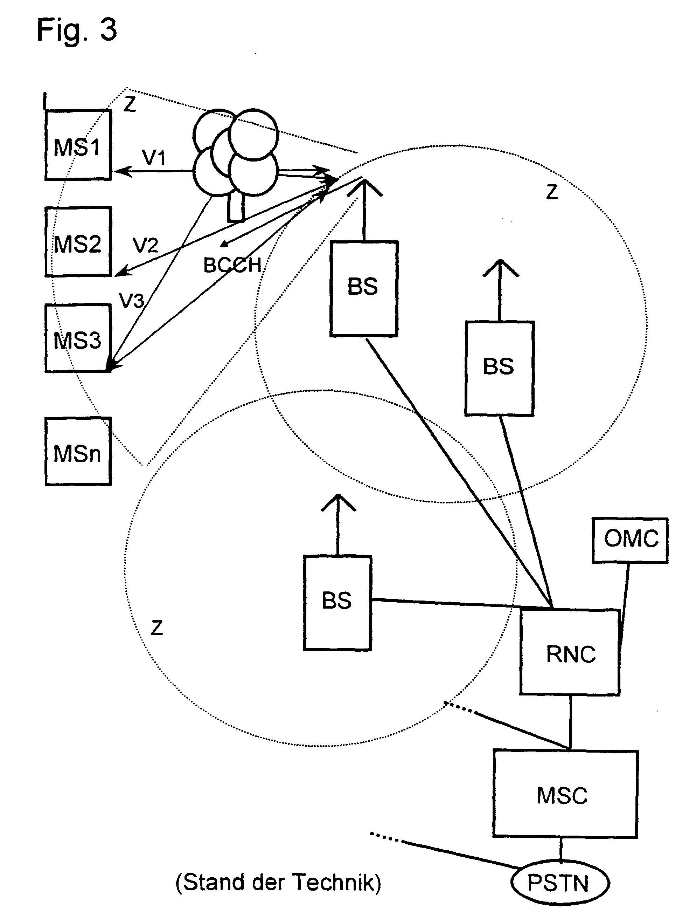

Wie aus FIG. 3 ersichtlich, besteht ein beispielhaftes Mobilfunk-Kommunikationssystem aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Der Begriff Basisstation ist dabei weitestgehend auch lediglich als Standort z. B. einer Sendeantenne auslegbar. Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt, z.B. für Teilbereiche um die Basisstationen BS herum.

In FIG. 3 sind beispielhaft Verbindungen V1, V2, V3 zur Übertragung von Nutzinformationen und Signalisierungsinformationen zwischen Mobilstationen MS1, MS2, MS3, MSn und einer Basisstation BS dargestellt. Ein Operations- und Wartungszentrum OMC realisiert Kontroll- und Wartungsfunktionen für das Mobilfunknetz bzw. für Teile davon. Die Funktionalität dieser Struktur ist auf andere Kommunikationssysteme, insbesondere Funk- Kommunikationssysteme übertragbar, in denen das nachfolgende Verfahren zum Einsatz kommen kann, insbesondere für Teilnehmerzugangsnetze mit drahtlosem Teilnehmeranschluß.

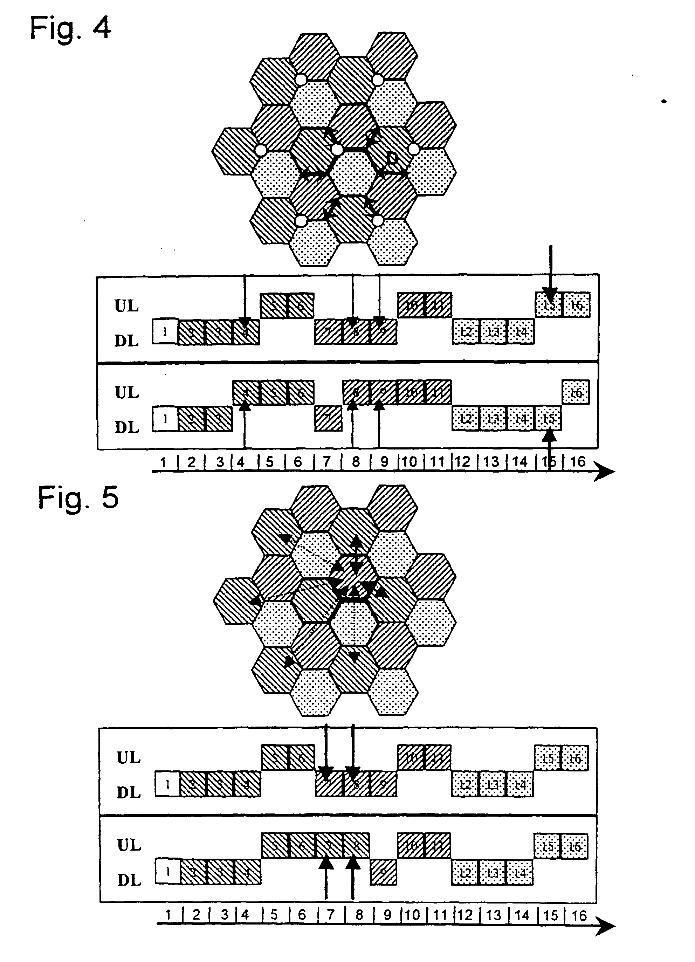

In Fig. 4 und den folgenden Figuren sind ein Mobilfunksystem mit idealtypischem Macroenvironment und die dazugehörigen Übertragungsrahmen von dessen Zellen Z dargestellt. Macroenvironment bedeutet gemäß den Simulationsvorschriften für Macro- und Microenvironment in UMTS 30.03 der ETSI, daß zum Senden und Empfangen ein hoher Mast verwendet wird, der deutlich über die Dachkante von Häusern hinausragt. Dabei sei N = 16 die Anzahl der im Übertragungsrahmen zur Verfügung stehenden Zeitschlitze und ferner sei eine Dreier-Cluster-Zelleinteilung bereitgestellt, die im folgenden mit Zellen R (punktiert), G (rechts schraffiert) und B (links schraffiert) bezeichnet werden. Jede Zelle verfügt ferner über eine bestimmte Anzahl von Uplink- und Downlinkzeitschlitzen (z.B. sei *n*_{*U*}*(R)* die Anzahl der Aufwärtsverbindungsschlitze bzw. Uplinkzeitschlitze für die Zelle R).

In der Darstellung wird zur Veranschaulichung ein erstes zentrales Cluster in der Zellenabbildung je nach Gruppe punktiert, mit Links- bzw. Rechtsschraffur und hinsichtlich der Übertragungszuordnung in dem oberen Diagramm dargestellt. Gegenüber weiteren Clustern, die dieses Cluster umgeben, ist dieses zentrale Cluster von einem Rahmen umgeben. Hinsichtlich der Übertragungszuordnung sind die Übertragungsparameter der weiteren benachbarten Cluster in dem jeweils unteren Diagramm dargestellt. Durch weiße Kreise sind die Positionen der Basisstationen BS mit Sektorantennen dargestellt, die jeweils drei sie umgebende Zellen Z (R, G, B) versorgen, die zur Vereinfachung typischerweise schematisch als Hexagone dargestellt sind.

Alternative Anordnungen sind jedoch ebenso möglich, wie beispielsweise die Anordnung jeweils einer eigenen Basisstation mit einer omnidirektionalen Antenne in der Mitte jeder einzelnen Zelle.

Anhand der nachfolgenden Schritte und Figuren wird das hier vorgeschlagene Verfahren zur übersichtlichen Erläuterung in einzelnen Stufen vorgestellt.

Fall a: In Fig. 4 ist ein Clustering mit mehreren Schaltzeitpunkten dargestellt, d.h. jede Zelle sowohl im Cluster wie auch im Reuse hat ihren eigenen UL/DL-Schaltzeitpunkt. Dabei können die Schaltzeitpunkte innerhalb der Zellen jeweils einer Gruppe von Zellen gegenüber den Schaltzeitpunkten der anderen Gruppenmitgliedern verschieden sein. Die Anzahl der Zeitschlitze pro Zelle ist dabei jedoch noch fest. Allen Zellen ist die gleiche Anzahl von Ressourcen zugewiesen. Die Übertragungsrahmen der benachbarten Zellen der drei Gruppen werden zweckmäßig so synchron gesteuert, daß alle Übertragungsrahmen gleichzeitig im Downlink mit dem Zeitschlitz 1 für die Übertragung allgemeiner Informationen der Basisstationen an Mobilstationen in den entsprechenden Zellen beginnen.

Die Verwendung mehrerer Schaltzeitpunkte (multiple switching points), d.h. pro Zelle einen separaten Schaltzeitpunkt, gewährleistet bei sich ändernden Uplink/Downlink-Verhältnissen eine minimale Interferenzsituation. Verschiebt man den Schaltzeitpunkt, so kommt es zwar zu einer MS-MS-Interferenz zwischen benachbarten Mobilstationen, dabei bleibt aber eine minimale Distanz D zwischen den Mobilstationen gewahrt, so daß die Interferenzsituation relativ unkritisch ist. Als Beispiel sei die Übertragung im vierten Kanal bzw. Zeitschlitz aufgeführt, wo eine Zelle der zentralen Gruppe in Abwärtsrichtung überträgt, die benachbarten Zellen dieser Gruppe bei einem Mindestabstand D aber in Aufwärtsrichtung. Eine MS-MS-Interferenz zwischen zwei Mobilstationen in gleichen Zellgruppen und mit gleichem Übertragungskanal ist somit aufgrund der minimalen Distanz D zulässig.

Will man aber bei dieser Kanalzuteilungsstrategie einer inhomogenen Lastverteilung Rechnung tragen, die zu einer Änderung der Anzahl der Kanäle führt, d.h. die Zeitschlitze einer Zelle mit wenig Verkehrsaufkommen in eine Zelle mit viel Verkehrsaufkommen innerhalb des Clusters verschieben, ist diese minimale Distanz unter bestimmten Voraussetzungen nicht mehr gegeben, wie dies in Fig. 5 dargestellt ist. Die kritischen MS-MS-Interferenzen treten hier auf, da sich die Anzahl der Zeitschlitze pro Zelle innerhalb des Reuse so ändert, daß in diesem Fall die MS-MS-Interferenz für die Zeitschlitze 7 und 8, d.h. für Zellen verschiedener Gruppen, in vollem Umfang besteht, da die minimale Distanz D nicht mehr gegeben ist.

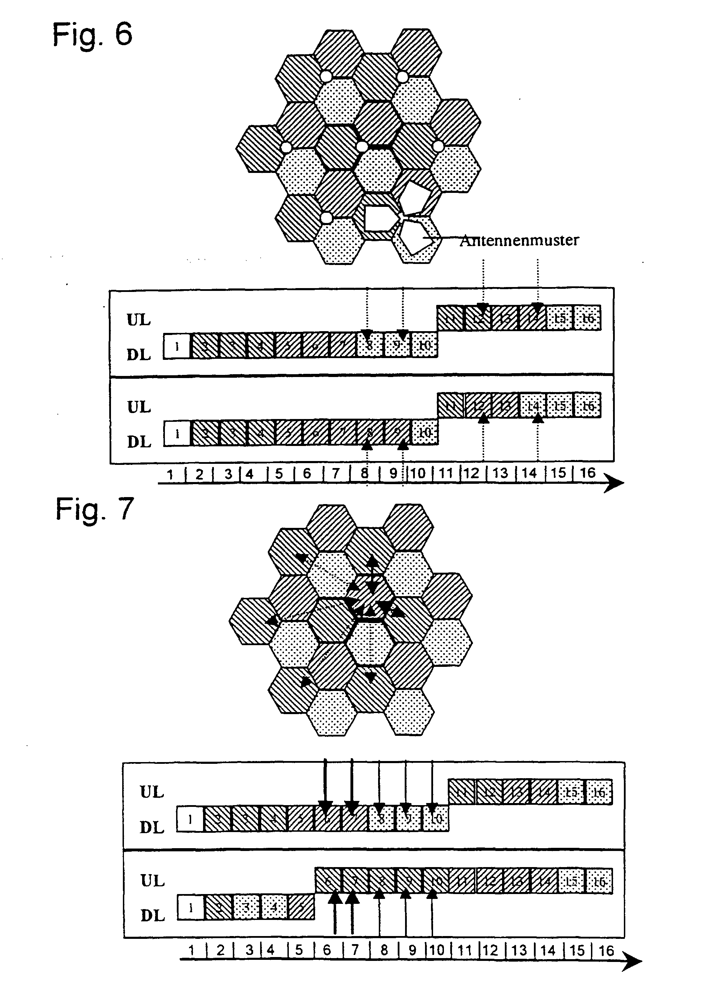

Fall b: Ein Kanalzuteilungsverfahren gemäß Fig. 6, das nur einen Schaltpunkt verwendet, d.h. die Zeitschlitze für Uplink und Downlink gruppiert, ist bezüglich einer sich ändernden Aufteilung der Zeitschlitze auf die Zellen bei gleichzeitiger Gewährleistung von minimaler Interferenz besser geeignet. Durch das gemeinsame Umschalten der Senderichtung in allen Zellen kann es nicht zu MS-MS-Interferenzen kommen. Z.B. kann in Fig. 6 innerhalb einer Senderichtung an jedem Standort eine andere Aufteilung der Zeitschlitze auf die Drei Sektoren erfolgen. Dabei kann nunmehr der minimale Wiederholabstand z.B. in DL- bzw. Abwärtsrichtung zwischen Zellen unterschiedlicher Richtung verletzt werden, d.h. eine Mobilstation MS empfängt von zwei benachbarten Basisstationen gleichzeitig Daten bzw. Signale. Für Mobilstationen, die sich nahe bei ihrer Basisstation befinden, stellt dies aufgrund genügender Pegelunterschiede kein Problem dar. Den Mobilstationen, die sich mittig zwischen versorgender und störender Basisstation befinden, so daß sie etwa gleiche Signalpegel empfangen, können ungestörte, also insbesondere verschiedene Zeitschlitze zugewiesen werden, in denen diese Kollisionen nicht auftreten können.

Ändert sich hingegen der Schaltzeitpunkt, kann neben der fehlenden minimalen Distanz D zusätzlich auch noch die obengenannte MS-MS-Interferenz auftreten, wie dies in Fig. 7 dargestellt ist. Ändert sich der Schaltzeitpunkt im Reuse-Cluster aufgrund eines anderen UL/DL-Verhältnisses, kommt es bei nur einem Schaltzeitpunkt pro Übertragungsrahmen und gruppierten Uplink/Downlink-Zeitschlitzen entsprechend zu extrem störenden MS-MS-Interferenzen.

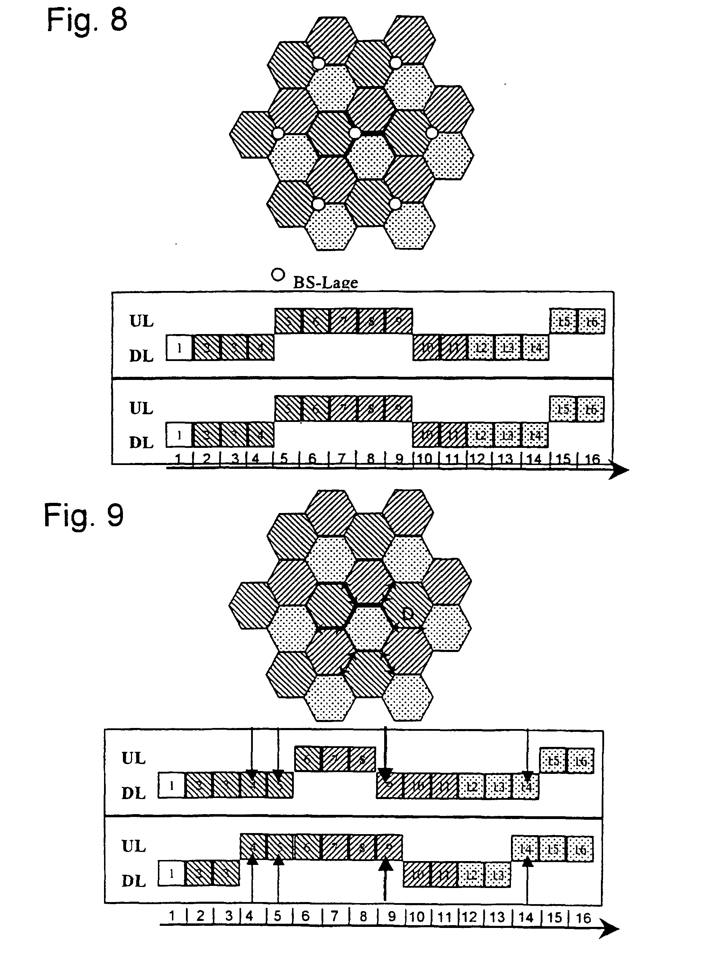

Fall c: Kombiniert man die Vorteile aus den beiden Verfahren, ergibt sich ein Zuteilungsschema, das bei Änderung des UL/DL-Verhältnisses und sich änderndem Verkehrsaufkommen keine problematischen MS-MS-Interferenzen hat. Dieses optimierte Verfahren ermöglicht zum einen mehrere variable Schaltzeitpunkte, aber auch eine Minimierung der Situation, daß in unmittelbar benachbarten Zellen auf dem gleichen Kanal (Zeitschlitz) gleichzeitig gesendet bzw. empfangen wird (MS-MS-Interferenz). Dies kann, wie in Fig. 8 dargestellt, dadurch erreicht werden, daß sich die Übertragungsrichtung bei den Zeitschlitzen an der Grenze zur nächsten Zelle im Cluster bzw. vorzugsweise im gesamten Kommunikationsnetz der Umgebung nicht ändert (wie unter b). D.h. wenn z.B. der letzte zur Zelle G gehörende Zeitschlitz im Uplink ist, muß der erste zur Zelle R gehörende Zeitschlitz ebenfalls im Uplink sein. An den Zellgrenzen innerhalb des Übertragungsrahmens kommt es dann zu keinem UL/DL-Wechsel. Damit hat man eine alternierende Einteilung UL/DL für Zelle B, DL/UL für Zelle G und wieder UL/DL für die nächste Zelle im Cluster. Fig. 8 stellt somit ein Hybridverfahren mit alternierenden UL/DL-Wechseln für aufeinanderfolgenden Zellen im Übertragungsrahmen dar.

Wird hierbei das Verhältnis von Uplink/Downlink-Zeitschlitzen in einer Zelle geändert, wie dies in Fig. 9 dargestellt ist, kommt es zwar zu MS-MS-Interferenzen, aber die minimale Distanz D bleibt gewahrt, d.h. die Situation, daß sich gegenseitig störende Mobilstationen in unmittelbarer Nachbarschaft befinden, wird vermieden. D.h. bei diesem Hybridverfahren sind alternierende UL/DL-Wechsel für aufeinanderfolgenden Zellen im Übertragungsrahmen möglich, wobei innerhalb der Zelle der UL/DL-Schaltzeitpunkt verschoben wird.

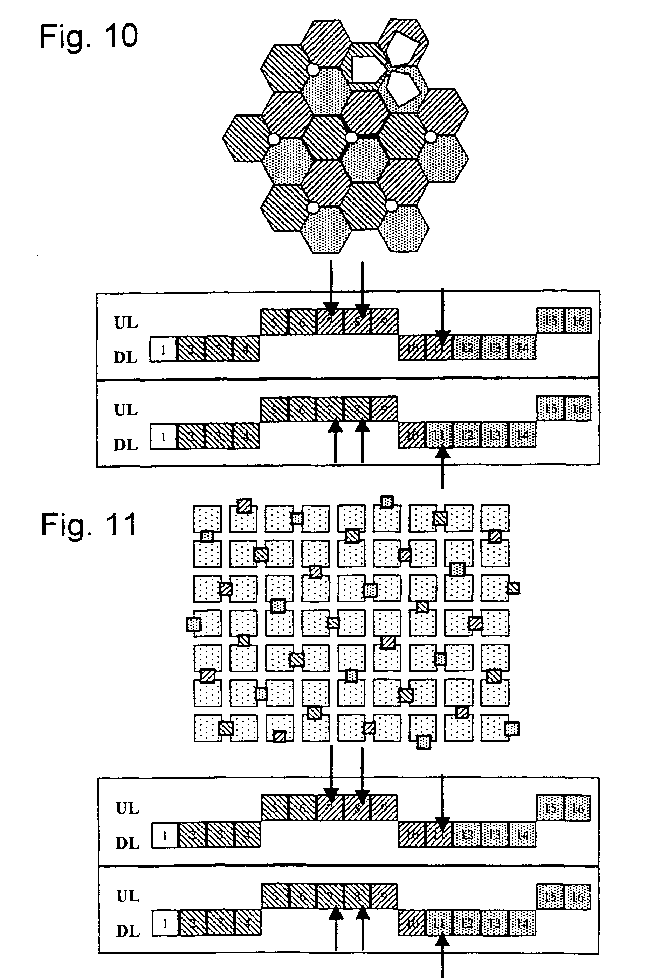

Der zweite kritische Anwendungsfall ist die Belegung bzw. Allokierung unterschiedlich vieler Ressourcen in den unterschiedlichen Zellen aufgrund von örtlich unterschiedlichem Verkehrsaufkommen. In diesem in Fig. 10 dargestellten Fall ist die minimale Distanz zwar nicht mehr gegeben, aber eine MS-MS-Interferenz, bei der derselbe Zeitschlitz in der unmittelbaren Nachbarschaft für unterschiedliche Übertragungsrichtungen verwendet wird, wird trotzdem vermieden. Somit ist auch ein Hybridverfahren mit alternierenden UL/DL-Wechsel für aufeinanderfolgenden Zellen im Übertragungsrahmen möglich, bei dem sich die Anzahl der Ressourcen pro Zelle im Reuse-Cluster anders verteilt.

Das Hybridverfahren ermöglicht somit die Kombination der beiden Fälle a und b, also mehrere Schaltzeitpunkte (vorzugsweise aber nicht notwendig nur einen pro Zelle) mit alternierenden UL/DL-Wechseln von aufeinanderfolgenden zellspezifischen Kanalzuteilungen innerhalb des Übertragungsrahmens.

Als weiteres Ausführungsbeispiel ist ein anderes Szenario eines Dreier-Clusters in einer Microenvironment als Manhatten-Gitternetz mit beispielhaftem Übertragungsrahmen in Fig. 11 dargestellt. Microenvironment bedeutet dabei, daß die Sende- und Empfangsantennen deutlich unterhalb der Dachkanten angeordnet sind und zur Versorgung von Straßen zwischen Häuserblöcken dienen. Die weißen Linien stellen hier die Straßen dar, die punktierten Kästen Häuserblöcke. Die Antennen, die vorzugsweise von Straßenkreuzungen entfernt zwischen je zwei Häuserblöcken angeordnet sind, dienen dabei in der Regel nicht der Versorgung der Blöcke sondern der Straßen. Das Übertragungsschema entspricht hier dem der Fig. 10.

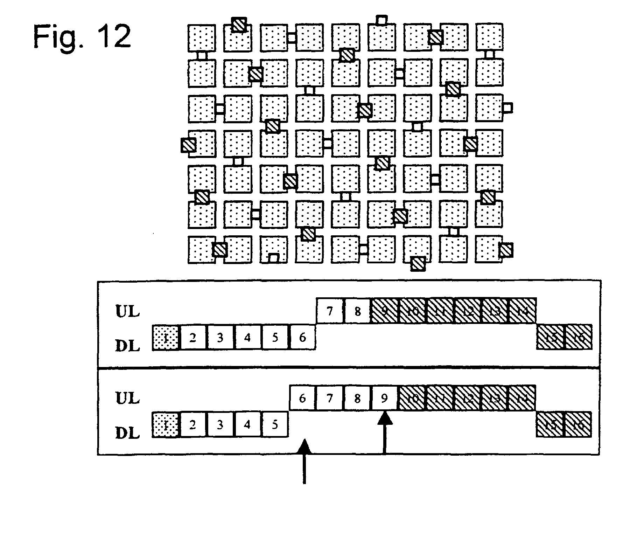

Fig. 12 stellt ein weiteres beispielhaftes Manhatten-Szenario, hier jedoch mit einem Zweier-Cluster, und einen entsprechenden Übertragungsrahmen dar. Die Anordnung der Basisstationen innerhalb der Zellen ist wie im vorherigen Beispiel.

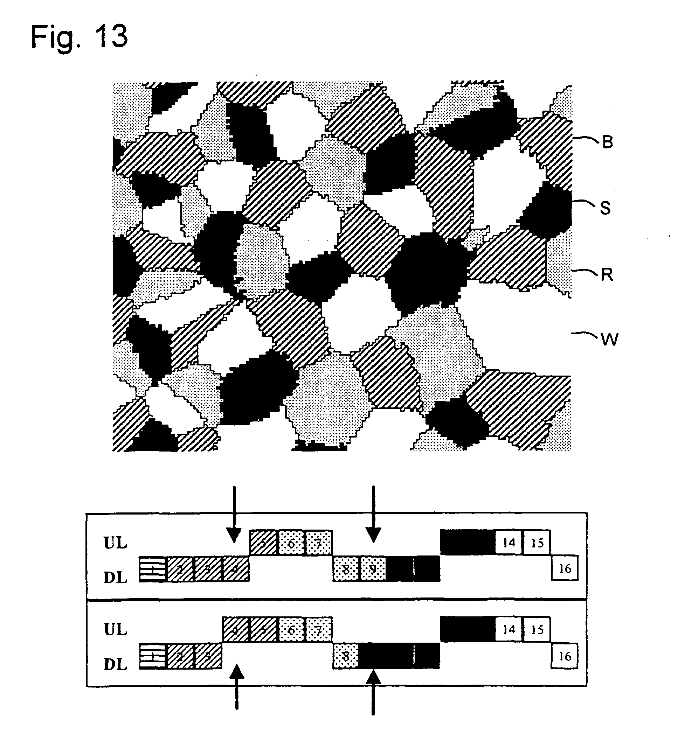

In Fig. 13 ist gemäß einem noch weiteren Ausführungsbeispiel eine andere beispielhafte Zellenanordnung mit einer typischen Ausprägung von Zellen in einem realen Netz mit mittlerem Re-Use von Vier dargestellt. Dabei prägen sich gemäß der inhomogenenen Ausbreitungsbedingungen realer Funkumgebungen beliebige Zellformen mit variablen Anzahlen von Nachbarzellen heraus, die z.B. in einem mittleren Re-Use von Vier mit Zeitschlitzen versorgt werden können (vgl. Vierfarbentheorem), d.h. bei dieser Anordnung werden anstelle von drei aufeinander abzustimmenden Gruppen aus Zellen vier Gruppen R, G, B, W aus Zellen gebildet, deren Schaltzeitpunkte und Schaltrichtungen wie im Übertragungsrahmen dargestellt gemäß dem hybriden Zuteilungsverfahren aus Fall c aufeinander abgestimmt werden können.

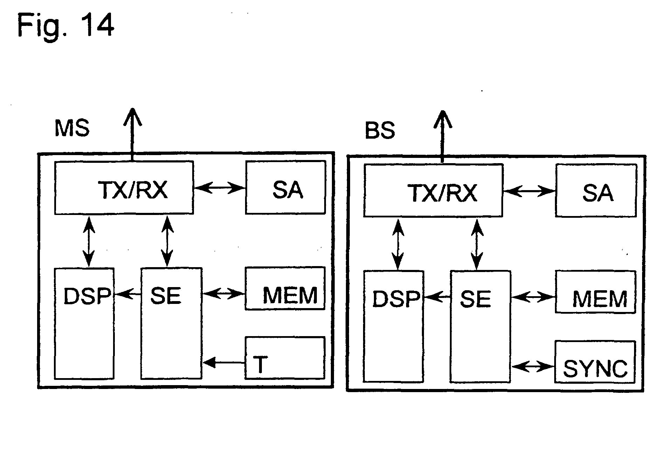

Die Basisstation BS enthält eine in Fig. 14 dargestellte Sende/Empfangseinrichtung TX/RX, die abzustrahlende Sendesignale digital/analog wandelt, vom Basisband in den Frequenzbereich der Abstrahlung umsetzt und die Sendesignale moduliert und verstärkt. Eine Signalerzeugungseinrichtung SA hat zuvor die Sendesignale in Funkblöcken zusammengestellt und dem entsprechenden Frequenzkanal und Zeitschlitz zugeordnet. Eine Signalverarbeitungseinrichtung DSP wertet über die Sende/Empfangseinrichtung TX/RX empfangene Empfangssignale aus und führt eine Kanalschätzung durch.

Zur Signalverarbeitung werden die Empfangssignale in Symbole mit diskretem Wertevorrat umgewandelt, beispielsweise digitalisiert. Eine Signalverarbeitungseinrichtung DSP, die als digitalen Signalprozessor z.B. einen JD-Prozessor zum Detektieren der Nutzinformationen und der Signalisierungsinformationen nach dem JD-CDMA-Verfahren (joint detection) enthält, wertet die Datenteile aus. Das Zusammenwirken der Komponenten und die Einstellung des Umschaltzeitpunkts SP wird durch eine Steuereinrichtung SE der Basisstation BS gesteuert. Zugehörige Daten über den Umschaltzeitpunkt SP und die konkreten Gegebenheiten der Verbindung werden in einer Speichereinrichtung MEM zwischengespeichert.

Die Mobilstation MS enthält entsprechend adaptiert die für die Basisstation BS erläuterten Baugruppen und zusätzlich ein Bedienfeld T. Am Bedienfeld T kann der Teilnehmer Eingaben vornehmen, u.a. eine Eingabe zum Aktivieren der Mobilstation MS oder zum Verbindungsaufbau einer Verbindung zur Basisstation BS.

Die Steuereinrichtung SE wertet in Abwärtsrichtung gesendete und von der Mobilstation MS empfangene Signale sowie von der Mobilstation zur Basisstation gesendete Signale aus und bestimmt den Bedarf an Daten, die im DL und im UL zu übertragen sind. Entsprechend des Bedarfs werden die zu verwendenden Kanäle und die Schaltzeitpunkte festgelegt. Vorzugsweise werden diese Daten der kommunizierenden Einrichtung übermittelt. Weiterhin erfolgt eine Abstimmung der zuzuweisenden Kanäle und Schaltzeitpunkte mit den Basisstationen der benachbarten Zellen.

Bei einem beispielhaften Steuerverfahren wird für ein Dreier-Cluster zuerst eine grobe Voreinteilung der Ressourcen auf einer langsamen Zeitachse vorgenommen. Vorteilhafterweise wird die Anzahl der nach dem BCCH-Zeitschlitz verbleibenden Zeitschlitze durch drei geteilt und den einzelnen Zellgruppen zugewiesen. Diese Grobeinteilung kann bei entsprechendem Bedarf auch anders vorgenommen werden.

Danach wird auf einer schnelleren Zeitachse, d.h. in kurzen Zeitabständen zur Überprüfung aktueller Anforderungen wiederholt festgestellt, welche Allokierungsanforderungen für eine Zelle und für die dazu benachbarten Zellen bestehen. Dementsprechend erfolgt dann eine Zuteilung der Ressourcen und die Festlegung der erforderlichen Schaltzeitpunkte für diese Zellen, d.h. eine Zuteilung der ursprünglichen Ressourcen benachbarter Zellen für eine erste Zelle und/oder die Verschiebung des Zeitschlitzes für die Umschaltung.

Eine Abstimmung durch die benachbarten Basisstationen selber wäre mit einem sehr hohen und häufigen Austausch von Daten unter diesen verbunden. Einfacher ist daher eine zentrale Steuerung der Ressourcen- bzw. Kanalzuweisungen und Schaltzeitpunkte für eine Vielzahl von Basisstationen durch z.B. die Einrichtungen RNM zum Zuteilen von funktechnischen Ressourcen oder die Mobilvermittlungsstellen MSC, denen dazu jeweils die aktuellen Lastverhältnisse und Ressourcenanforderungen von den Basisstationen BS übermittelt werden.

Die Steuerung könnte im Extremfall auch von den Mobilstationen übernommen werden, ist dann jedoch nachteilhaft aufwendig.

Die Vorsteuerung der Umschaltzeitpunkte und die Signalisierung an die kommunizierenden Stationen kann z.B. im Downlink über den BCCH (Broadcast Control CHannel) erfolgen.

## Patentansprüche

1. Verfahren zur Steuerung einer Kanalzuteilung in Übertragungsrahmen mit einer Vielzahl von Kanälen zur Informationsübertragung in einem Kommunikationssystem mit einer Vielzahl von Zellen (Z), bei dem
die Zellen (Z) zu Zellgruppen (R, G, B) geordnet werden, und Cluster mit einer Zelle aus jeder der Zellgruppen gebildet werden,
jedem Cluster ein Übertragungsrahmen mit Kanälen für eine Übertragung in Aufwärts- (UL) oder Abwärtsrichtung (DL) zugeordnet wird, und
den Zellen (Z) eines Clusters jeweils eine variable Anzahl aufeinanderfolgender Kanäle des Übertragungsrahmens exklusiv zugeordnet wird, wobei bei der Zuordnung an einem Übergang zwischen zwei benachbarten Zellen (Z) eine jeweils gleiche Übertragungsrichtung (UL, DL) für die Kanäle gewählt wird.

2. Verfahren nach Anspruch 1, bei dem
als Kanäle Zeitschlitze eines TDD-Übertragungsrahmens (fr) verwendet werden.

3. Verfahren nach Anspruch 1 oder 2, bei dem
Schaltzeitpunkte (SP) zwischen Übertragungen in Aufwärts und Abwärtsrichtung innerhalb einer Zelle (Z) oder Zellgruppe (R, G, B) in Abhängigkeit von sich ändernden Lastverteilungen in der Zelle (Z) oder Zellgruppe und/oder in dem Kommunikationssystem gesteuert werden, insbesondere eine unterschiedliche Anzahl von Kanälen pro Zelle (Z) oder Zellgruppe (R, G, B) zugeteilt wird.

4. Verfahren nach einem der vorherigen Ansprüche, bei dem
mehrere Schaltzeitpunkte (SP) zwischen Aufwärts- (UL) und Abwärtsrichtung (DL) innerhalb einer Zellgruppe (R, G, B) zeitlich unabhängig und variabel von den Schaltzeitpunkten (SP) der benachbarten Zellen (Z) oder Zellgruppen (R, G, B) gesteuert werden.

5. Verfahren nach einem der vorherigen Ansprüche, bei dem
die Zellen (Z) oder die Zellgruppe (R, G, B) in einem Dreier-Cluster angeordnet werden, wobeidie Schaltzeitpunkte (SP) zwischen Übertragungen in Aufwärts- (UL) und Abwärtsrichtung (DL) innerhalb einer Zelle (Z) oder einer Zellgruppe (R, G, B) mit einer oder zwei aktiven benachbarten Zellgruppen abgestimmt werden.

6. Verfahren nach einem der Ansprüche 1 bis 4, bei dem
die Zellen (Z) oder die Zellgruppe (R, G, B, W) in einem Vierer-Cluster angeordnet werden, wobei die Schaltzeitpunkte (SP) zwischen Übertragungen in Aufwärts- (UL) und Abwärtsrichtung (DL) innerhalb einer Zelle (Z) oder Zellgruppe (R, G, B, W) mit bis zu drei aktiven benachbarten Zellen Zellgruppen abgestimmt werden.

7. Verfahren nach einem der vorherigen Ansprüche, bei dem
bei einer Anordnung der Zellen (Z) zu einer Vielzahl von Clustern, wobei von Cluster zu Cluster jeweils nur Zellen verschiedener Zellgruppen direkt benachbart angeordnet sind, und in direkt benachbarten und gleichzeitig aktiven Zellen verschiedener Cluster in der gleichen Übertragungsrichtung (UL, DL) übertragen wird.

8. Verfahren nach einem der vorherigen Ansprüche, bei dem
mehrere zeitlich variable Schaltzeitpunkte (SP) mit alternierendem Aufwärts- und Abwärtsrichtungs-Wechsel von aufeinanderfolgenden zellspezifischen Kanalzuteilungen innerhalb des Übertragungsrahmens derart gesteuert werden, daß die Verbindungsrichtung aktiver und direkt benachbarter Zellen (Z) jeweils gleich ist.

9. Einrichtungen eines Funk-Kommunikationssystems, aufweisend Schaltungen
zum Steuern einer Kanalzuteilung in Übertragungsrahmen mit einer Vielzahl von Kanälen zur Informationsübertragung in einer Vielzahl von Zellen (Z),
zum Ordnen der Zellen (Z) zu Zellgruppen (R, G, B) sowie zum Bilden von Clustern mit einer Zelle aus jeder der Zellgruppen, wobei jedem Cluster ein Übertragungsrahmen mit Kanälen für eine Übertragung in Aufwärts- (UL) oder Abwärtsrichtung (DL) zugeordnet ist, und
zum exklusiven Zuordnen jeweils einer variablen Anzahl aufeinanderfolgender Kanäle des Übertragungsrahmens zu den Zellen (Z) eines Clusters, wobei bei der Zuordnung an einem Übergang zwischen zwei benachbarten Zellen (Z) eine jeweils gleiche Übertragungsrichtung (UL, DL) für die Kanäle gewählt wird.

10. Einrichtungen nach Anspruch 9, die
als eine Basisstation (BS), eine Mobilstation (MS), eine Einrichtung (RNC) zum Zuteilen von funktechnischen Ressourcen und/oder eine Mobilvermittlungsstelle (MSC) verwirklicht ist.

## Claims

1. Method for controlling a channel allocation in transmission frames having a multiplicity of channels for information transmission in a communications system comprising a multiplicity of cells (Z), in which
the cells (Z) are organized into cell groups (R, G, B), and clusters are formed with one cell from each of the cell groups,
a transmission frame having channels for a transmission in the uplink (UL) or downlink (DL) is allocated to each cluster, and
a respective variable number of successive channels of the transmission frame is exclusively allocated to the cells (Z) of a cluster, and, in the allocation, a respective identical transmission direction (UL, DL) is selected for the channels at a transition between two adjacent cells (Z).

2. Method according to Claim 1, in which time slots of a TDD transmission frame (fr) are used as channels.

3. Method according to Claim 1 or 2, in which switching points (SP) between transmissions in the uplink and downlink within a cell (Z) or cell group (R, G, B) are controlled in dependence on changing load distributions in the cell (Z) or cell group and/or in the communications system, particularly a different number of channels per cell (Z) or cell group (R, G, B) is allocated.

4. Method according to one of the preceding claims, in which a number of switching points (SP) between the uplink (UL) and downlink (DL) within a cell group (R, G, B) are controlled independently in time and variably by the switching points (SP) of the adjacent cells (Z) or cell groups (R, G, B).

5. Method according to one of the preceding claims, in which the cells (Z) or the cell group (R, G, B) are arranged in a cluster of three, the switching points (SP) between transmissions in the uplink (UL) and downlink (DL) within a cell (Z) or a cell group (R, G, B) being matched to one or two active adjacent cell groups.

6. Method according to one of Claims 1 to 4, in which the cells (Z) or the cell group are arranged in a cluster of four, the switching points (SP) between transmissions in the uplink (UL) and downlink (DL) within a cell (Z) or cell group (R, G, B, W) being matched to up to three active adjacent cell groups.

7. Method according to one of the preceding claims, in which, in an arrangement of cells (Z) into a multiplicity of clusters, with only cells of different cell groups respectively being arranged directly adjacent from cluster to cluster, and in directly adjacent and at the same time active cells of different clusters, transmission is carried out in the same transmission direction (UL, DL).

8. Method according to one of the preceding claims, in which a number of time-variable switching points (SP) with alternating uplink/downlink change are controlled by successive cell-related channel allocations within a transmission frame in such a manner that the direction of connection of active and directly adjacent cells (Z) is in each case the same.

9. Devices in a radio communications system, having circuits
for controlling channel allocation in transmission frames having a multiplicity of channels for information transmission in a multiplicity of cells (Z),
for organizing the cells (Z) into cell groups (R, G, B) and for forming clusters with one cell from each of the cell groups, a transmission frame having channels for a transmission in the uplink (UL) or downlink (DL) being allocated to each cluster, and
for the exclusive allocation of a respective variable number of successive channels of the transmission frame to the cells (Z) of a cluster, with, in the allocation, a respective identical transmission direction (UL, DL) being selected for the channels at a transition between two adjacent cells (Z).

10. Devices according to Claim 9, which
are embodied as a base station (BS), a mobile station (MS), a device (RNC) for allocating radio resources and/or a mobile switching centre (MSC).

## Revendications

1. Procédé pour la commande d'une attribution de canal dans des trames de transmission comprenant une pluralité de canaux pour la transmission d'information dans un système de communication comprenant une pluralité de cellules (Z), dans lequel
les cellules (Z) sont disposées en groupes de cellules (R, G, B), et des clusters sont formés avec une cellule provenant de chacun des groupes de cellules,
une trame de transmission avec des canaux pour une transmission dans le sens ascendant (UL) ou le sens descendant (DL) est attribuée à chaque cluster, et
un nombre variable de canaux successifs de la trame de transmission est attribué de façon exclusive respectivement aux cellules (Z) d'un cluster, une direction de transmission (UL, DL) respectivement identique étant choisie pour les canaux lors de l'attribution sur une transition entre deux cellules (Z) voisines.

2. Procédé selon la revendication 1, dans lequel
des créneaux temporels d'une trame de transmission TDD (fr) sont utilisés comme canaux.

3. Procédé selon la revendication 1 ou 2, dans lequel
les instants de commutation (SP) entre les transmissions dans le sens ascendant et le sens descendant à l'intérieur d'une cellule (Z) ou d'un groupe de cellules (R, G, B) sont commandés en fonction de répartitions de charge variables dans la cellule (Z) ou le groupe de cellules et/ou dans le système de communication, en particulier un nombre différent de canaux par cellule (Z) ou groupe de cellules (R, G, B) est attribué.

4. Procédé selon l'une quelconque des revendications précédentes, dans lequel plusieurs instants de commutation (SP) entre le sens ascendant (UL) et le sens descendant (DL) à l'intérieur d'un groupe de cellules (R, G, B) sont commandés indépendamment dans le temps et de façon variable par rapport aux instants de commutation (SP) des cellules (Z) voisines ou des groupes de cellules (R, G, B) voisins.

5. Procédé selon l'une quelconque des revendications précédentes, dans lequel les cellules (Z) ou le groupe de cellules (R, G, B) sont disposés dans un cluster de trois, les instants de commutation (SP) entre des transmissions dans le sens ascendant (UL) et le sens descendant (DL) à l'intérieur d'une cellule (Z) ou d'un groupe de cellules (R, G, B) étant accordés avec un ou deux groupes de cellules voisins actifs.

6. Procédé selon l'une quelconque des revendications 1 à 4, dans lequel les cellules (Z) ou le groupe de cellules (R, G, B, W) sont disposés dans un cluster de quatre, les instants de commutation (SP) entre des transmissions dans le sens ascendant (UL) et le sens descendant (DL) à l'intérieur d'une cellule (Z) ou d'un groupe de cellules (R, G, B, W) étant accordés avec jusqu'à trois groupes de cellules voisins actifs.

7. Procédé selon l'une quelconque des revendications précédentes, dans lequel, avec une disposition des cellules (Z) pour former une pluralité de clusters, à chaque fois seules des cellules de groupes de cellules différents étant disposées de façon directement voisine d'un cluster à l'autre, on transmet dans des cellules, directement voisines et simultanément actives, de différents clusters dans le même sens de transmission (UL, DL).

8. Procédé selon l'une quelconque des revendications précédentes, dans lequel plusieurs instants de commutation (SP) variables dans le temps avec un changement alternant de direction ascendante et de direction descendante d'attributions de canal spécifiques à la cellule et successives sont commandés à l'intérieur de la trame de transmission de telle sorte que la direction de liaison de cellules (Z) actives et directement voisines est identique à chaque fois.

9. Dispositif d'un système de communication par radio, présentant des circuits
pour la commande d'une attribution de canal dans des trames de transmission avec une pluralité de canaux pour la transmission d'information dans une pluralité de cellules (Z),
pour la disposition des cellules (Z) en groupes de cellules (R, G, B) et pour la formation de clusters avec une cellule provenant de chacun des groupes de cellules, une trame de transmission avec des canaux pour une transmission dans le sens ascendant (UL) ou le sens descendant (DL) étant attribuée à chaque cluster, et
pour l'attribution exclusive de respectivement un nombre variable de canaux successifs de la trame de transmission aux cellules (Z) d'un cluster, une direction de transmission (UL, DL) respectivement identique pour les canaux étant choisie lors de l'attribution sur une transition entre deux cellules (Z) voisines.

10. Dispositif selon la revendication 9, qui
est réalisé comme une station de base (BS), une station mobile (MS), un dispositif (RNC) pour l'attribution de ressources techniques de radio et/ou un centre de commutation de téléphonie mobile (MSC).
